# EUROPÄISCHE PATENTSCHRIFT

(11) **EP 1 221 042 B1**
(45) Veröffentlichungstag und Bekanntmachung des Hinweises auf die Patenterteilung: **14.11.2007**
(21) Anmeldenummer: 00962491.7
(22) Anmeldetag: 15.09.2000
(51) Int. Cl.: G01N 29/02

(54) **VERFAHREN ZUR HERSTELLUNG VON OBERFLÄCHENWELLENSENSOREN UND OBERFLÄCHENWELLENSENSOR**
METHOD FOR PRODUCING SURFACE ACOUSTIC WAVE SENSORS AND SUCH A SURFACE ACOUSTIC WAVE SENSOR
PROCEDE PERMETTANT DE PRODUIRE DES DETECTEURS D'ONDES ACOUSTIQUES DE SURFACE ET DETECTEUR D'ONDES ACOUSTIQUES DE SURFACE

(30) Priorität: 15.10.1999 DE 19949738
(43) Veröffentlichungstag der Anmeldung: 10.07.2002
(73) Patentinhaber: Forschungszentrum Karlsruhe GmbH, 76133 Karlsruhe (DE)
(72) Erfinder: RAPP, Michael, 69214 Eppelheim (DE); STAHL, Ullrich, 76187 Karlsruhe (DE)
(86) Internationale Anmeldenummer: PCT/EP2000/009008
(87) Internationale Veröffentlichungsnummer: WO 2001/029553

(56) Entgegenhaltungen:
- WO-A-91/02975
- US-A- 4 312 228
- PATENT ABSTRACTS OF JAPAN vol. 014, no. 429 (E-0978), 14. September 1990 (1990-09-14) & JP 02 166909 A (JAPAN RADIO CO LTD), 27. Juni 1990 (1990-06-27)

## Beschreibung

Die Erfindung betrifft ein Verfahren zur Herstellung von Oberflächenwellensensoren, auf der Basis von Oberflächenwellenbauelementen und einen Oberflächenwellensensor.

Der Einsatz von Oberflächenwellenbauelementen als Gassensoren geht auf Wohltjen zurück, der diese Meßtechnik seit 1979 untersucht (Wohltjen, H.; Dessy, R.; "Surface acoustic wave probe for chemical analysis"; Anal. Chem. 51 (1979) 1458-1469). Diese eigentlich als miniaturisierte Hochfrequenzfilter entwickelten OFW-Bauelemente finden in zunehmendem Maße auch als chemische und biochemische Sensoren Interesse (Rapp, M.; Barie, N.; Stier, S.; Ache, H.J.; "Optimization of an analytical SAW microsystem for organic gas detection"; Proc. IEEE Ultrason. Symp. (1995) 477-480). Als Sensoreigenschaft wird das massesensitive Verhalten solcher Bauteile ausgenutzt, indem eine auf den zu erfassenden Stoff selektive Beschichtung aufgebracht wird und das Bauteil das frequenzbestimmende Element eines Oszillatorschwingkreises bildet.

Die WO 91/02975 A offenbart einen Sensor zwischen Kupferelektroden auf einem Glassubstrat, auf das eine Parylenschicht aufgebracht ist, die mit einem Siliziummonoxidfilm bedeckt ist, wobei das Auslesen des Sensors z. B. über Oberflächenwellen erfolgt.

Aus der US 4312228 A ist ein Sensor bekannt, der ein piezoelektrisches Material zur Aufnahme eine Oberflächenwellen umfasst, wobei sich die Eigenschaften der Oberflächenwelle verändern, indem ein auf das piezoelektrische Material aufgetragenes Polymer mit der Umgebung wechselwirkt.

Die JP 02 166909 A offenbart ein Verzögerungselement als Sensor, bei dem die Parlyenbeschichtung der Feinabstimmung dient.

Bei einem OFW-Bauteil sind auf dem piezoelektrischen Substrat des Bauelements Interdigitaltransducer aufgebracht. Durch eine angelegte hochfrequente Wechselspannung wird der Sendetransducer zu Schwingungen angeregt. Die dadurch entstehende Oberflächenwelle läuft über das Substrat und wird durch den Piezoeffekt im Empfangstransducer wieder in ein elektrisches Wechselfeld verwandelt. Das elektrische Signal wird über einen Verstärker, der die aus der Dämpfung der akustischen Welle entstandenen Verluste ausgleicht, wieder in die Sendetransducer eingespeist. Dadurch kommt es im Schwingkreis zu einer Oszillation mit einer spezifischen Resonanzfrequenz, die aus der Laufzeit der akustischen und elektrischen Welle resultiert. Diese Frequenz wird als Meßsignal aus der Schaltung ausgekoppelt.

Die Ausbreitungsgeschwindigkeit der Oberflächenwelle ist von der Beschaffenheit der Oberfläche abhängig. Wird das piezoelektrische Substrat mit einer dünnen, selektiven Beschichtung belegt, so bewirkt dies eine Änderung der Schallgeschwindigkeit und damit der Resonanzfrequenz des Oszillatorschaltkreises.

Bei Beprobung des beschichteten Bauelements mit Analyten kommt es zu einer Sorption des Analyten in der Schicht und damit zu einer weiteren Massebelegung des Bauteils. Diese bewirkt wiederum eine Änderung der Schallgeschwindigkeit, was in einer meßbaren Veränderung der Oszillatorfrequenz resultiert. Da Frequenzen sehr genau gemessen werden können, sind auf diese Weise schon sehr geringe Änderungen der Massebeladung des Oberflächenwellenbauteils detektierbar.

Bei der Beschichtung des Oberflächenwellensensors mit einem viskosen Sorptionspolymer kommt es häufig zu einer Entnetzung der Sensoroberfläche durch das Sorptionspolymer. Dies führt zu einer ungleichmäßigen Schicht des Sorptionspolymers auf dem Substrat und durch die auf diese Weise hervorgerufene übermäßige Dämpfung zu einer drastischen Verschlechterung der Sensorempfindlichkeit.

Aufgabe der Erfindung ist es, ein Verfahren anzugeben, welches die Herstellung einer homogenen Sorptionspolymer-Schicht gestattet und einen Sensor mit einer homogenen Sorptionspolymer-Schicht bereitzustellen.

Gelöst wird diese Aufgabe durch die Merkmale der Patentansprüche 1 und 4. Die Unteransprüche beschreiben vorteilhafte Ausgestaltungen der Erfindung.

### Die Erfindung weist folgende besonderen Vorteile auf:

Aufgrund der besseren Benetzung der Sensoroberfläche durch die Sorptionspolymere können einfachere Beschichtungstechniken, wie die Tropfbeschichtung eingesetzt werden. Die verbesserte Benetzung führt zu einer gleichmäßigeren Abscheidung des Sorptionspolymers und damit zu einer geringeren Dämpfung als eine ungleichmäßig aufgebrachte vergleichbare Masse des selben Polymers. Die Empfindlichkeit des Sensors kann dadurch über die Erhöhung der Schichtdicke des Sorptionspolymers bis zu einer kritischen Dämpfung gesteigert werden. Durch die verbesserte Benetzung wird auch das Alterungsverhalten des Sensors positiv beeinflußt.

Die Erfindung wird im Folgenden anhand von Beispielen mit Hilfe der Figuren näher erläutert.

Dabei zeigt die Fig. 1 die Benetzungseigenschaften eines mit Parylen beschichteten und eines unbeschichteten Sensors. Die Fig. 2 und 3 zeigen die Phasenkurven von Sensoren mit zwei verschiedenen Sorptionspolymerschichten jeweils mit und ohne Parylenzwischenschicht.

Zur Förderung der Benetzung von polaren und damit hydrophilen Sorptionspolymeren wird die Interfaceschicht mittels einer kurzen (< 5 min.) Plasmabehandlung hydrophiliert. Da sich die Plasmabehandlung nur auf die Oberfläche des Polymerfilms auswirkt, bleiben dessen hydrophobe Barriereeigenschaften erhalten.

Durch Einsatz des Parylenfilms mit einer Dicke zwischen 50 und 200 nm ist auch die Verwendung von sauren/aggressiven Polymeren möglich geworden, welche durch die Barriereeigenschaft des Parylens keine Korrosion der Sensoroberfläche bzw. der zur Energieein- und Auskopplung notwendigen Interdigitaltransducer mehr verursachen können.

Hydrophile Sorptionspolymere sind z. B. PEG (PolyEthylenGlykol) oder PVA (PolyVinylAlkohol).

Bei Verwendung von nicht korrosiven Sorptionspolymeren oder bei Messung in inerten Medien kann die Dicke der Parylenschicht zwischen 20 und 30 nm liegen.

Der Einsatz von Parylenen als Schichtmaterial erfüllt zwei bestimmte Zwecke:

Ein dünner, gleichmäßiger Polymerfilm mit einer niederen Oberflächenspannung stellt eine haftverbessernde Zwischenschicht zwischen Substrat und Sorptionspolymeren dar und verhindert Entnetzungseffekte.

Der Parylenfilm schützt aufgrund seiner Barriereeigenschaften das OFW-Bauteil vor korrosiven Einflüssen durch saure und basische Sorptionspolymere oder aggressive Analyte bzw. Atmosphären.

Parylene bilden eine Familie von linearen, teilkristallinen und unvernetzten Polymeren mit interessanten Eigenschaften und vielfältigen Einsatzmöglichkeiten.

Ihr einfachster Vertreter, Parylen N (p-Xylylen), besteht aus einer linearen Polymerkette mit 1,4-ethylenverbrückten Phenylringen.

Breite industrielle Verwendung finden neben dem Parylen N aufgrund ihrer verringerten Permeabilität auch die chlorierten Varianten Parylen C und Parylen D.

Zur Beschichtung von Substraten mit dünnen Filmen aus Parylenen werden spezielle Vakuumapparaturen benötigt. Diese bestehen aus drei aufeinanderfolgenden miteinander verbundenen Kammern mit unterschiedlichen Temperatur- und Druckbedingungen.

In der Verdampferkammer wird die eingewogene Menge des Dimers vorgelegt, die Anlage evakuiert und das Edukt bei 160°C und einem Druck von 1 mbar sublimiert. Der erzeugte Dampf gelangt in den Pyrolyseofen, in welchem das Dimer bei 690°C in reaktive Monomere gespalten wird. Die Monomermoleküle kondensieren in der dritten Kammer bei Raumtemperatur gleichmäßig auf allen Oberflächen, wobei sie rasch zu einem transparenten und porenfreien Film polymerisieren.

Im Unterschied zum industriell eingesetzten Verfahren, in welchem üblicherweise Parylenschichtdicken zwischen 3 und 15 µm abgeschieden werden, wurde das Beschichtungsverfahren auf die in diesem Falle erheblich geringeren Schichtdicken von 20-200 nm optimiert.

Eine der Gründe für den Einsatz von Parylen-Filmen in der OFW-Sensorik besteht in der Anpassung der Oberflächenenergie des Sensors an die der Sorptionspolymere. Der abgeschiedene Film sollte als Zwischenschicht idealerweise sowohl eine gute Haftung an das Substrat als auch eine niedere Oberflächenenergie zur Verbesserung der Benetzungseigenschaften viskoser Polymere aufweisen.

Zur Überprüfung des Benetzungsverhaltens von Sorptionspolymeren auf Sensoren, welche mit einer dünnen Parylenschicht versehen wurden, erfolgten entsprechende Vergleichsexperimente mit unbeschichteten Sensoren.

Hierzu wurde auf mehreren unbeschichteten und parylenbeschichteten Sensoren je ein Tropfen (1.5 µl) der gleichen Polymerlösung auf die Oberfläche aufgesetzt und getrocknet. Zum Vergleich der durch die Beschichtung ausgelösten Phasenkurvenänderungen wurden die Bauteile vor und nach der Beschichtung mittels eines Netzwerk-Analysators charakterisiert.

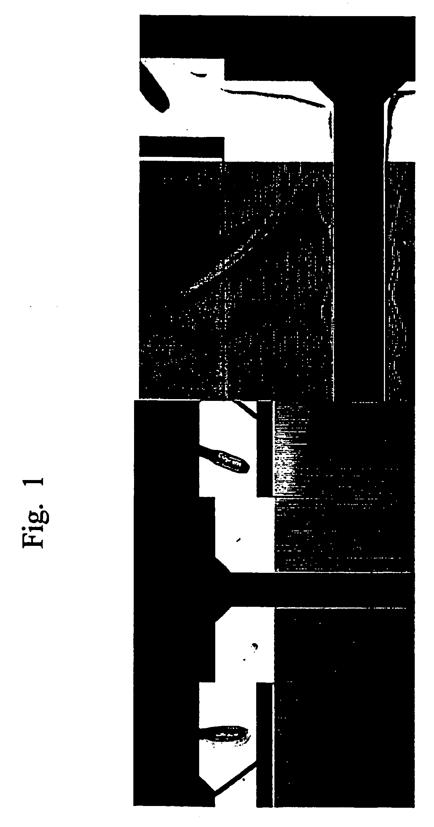

Die Fig. 1 zeigt Mikroskop-Fotographien von zwei mit dem Sorptionspolymer 1 tropfbeschichteten OFW-Sensoren. Das linke Bild zeigt die guten Benetzungseigenschaften des parylenbeschichteten Sensors, das rechte die mangelhaften des unbehandelten Sensors.

Im Falle des mit Parylen vorbehandelten Sensors ist eine exzellente Benetzung der Sensoroberfläche mit dem Sorptionspolymer zu erkennen. Im Vergleich dazu ist das Benetzungsverhalten des unbehandelten Sensors erheblich schlechter. So ist auf dem rechten Bild in Fig. 1 deutlich zu sehen, daß sich das abgeschiedene Polymer an den Rändern der aktiven Strukturen des OFW-Sensors sammelt und keine Benetzung der dazwischen liegenden Fläche auftritt.

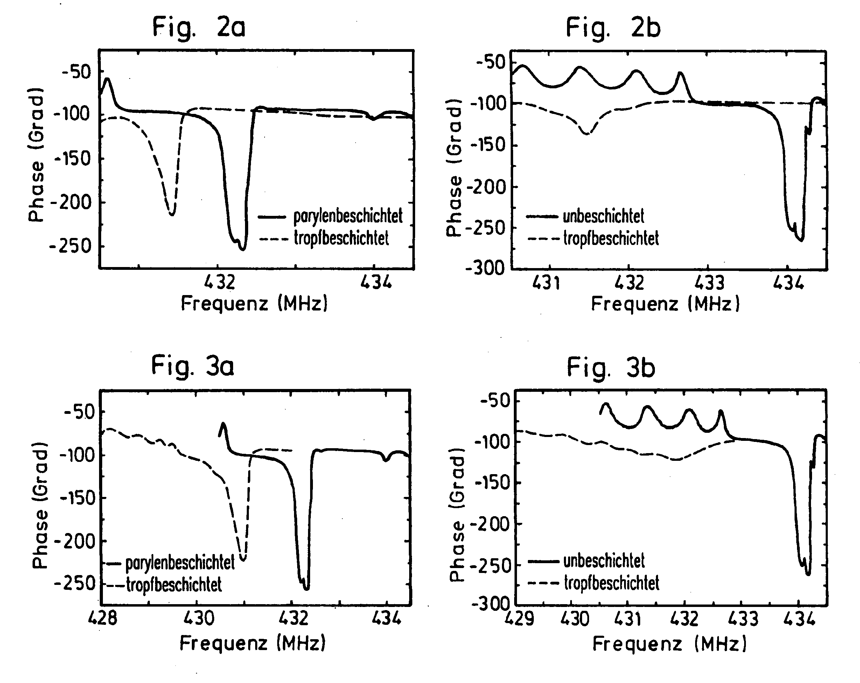

Die Fig. 2 zeigt die Veränderung der Phasenkurve durch Tropfbeschichtung mit dem Sorptionspolymer 1. Das linke Diagramm zeigt die Phasenkurven des Sensors mit der Parylen-Zwischenschicht, das rechte Diagramm die des Sensors ohne Zwischenschicht. Durch die stattfindende Entnetzung der nicht mit Parylen beschichteten Sensoroberfläche durch das Sorptionspolymer sammelt sich dieses bevorzugt in der Nähe der aktiven Interdigitalstrukturen und damit an der Stelle der größten Masseempfindlichkeit des Sensors an. Hierdurch wird jedoch eine größere als die tatsächlich erhaltene Schichtdicke simuliert, was die stärkere Verschiebung der Phasenkurve zu tieferen Frequenzen (s. Fig. 2, rechtes Bild) erklärt.

Der Vergleich beider Diagramme in Fig. 2 zeigt ein deutlich besseres Phasenverhalten des mit Parylen vorbehandelten OFW-Sensors. Die nach der Tropfbeschichtung verbleibende Phasenreserve (= Differenz zwischen Phasenminimum und Phasenarbeitspunkt der Oszillatorelektronik) ist erheblich größer. Die geringere Frequenzverschiebung durch die Beschichtung bei gleicher Menge an aufbeschichtetem Polymer ist mit dessen gleichmäßigeren Verteilung auf der Sensoroberfläche zu erklären. Der Vergleich der Mikroskop-Aufnahmen der beiden tropfbeschichteten Sensoren in Fig. 1 erklärt den in Fig. 2 gefundenen Unterschied der Sensoreigenschaften.

Die Fig. 3 zeigt die Veränderung der Phasenkurve durch Tropfbeschichtung mit dem Sorptionspolymer 2. Das linke Diagramm zeigt die Phasenkurven des Sensors mit der Parylen-Zwischenschicht, das rechte Diagramm die des Sensors ohne Zwischenschicht.

Im Vergleich zu den Phasenkurven der Sensoren gemäß Fig.2 erhält man bei Betropfen des unbehandelten Sensors mit diesem Sorptionspolymer einen nicht mehr verwendungsfähigen Sensor. Dagegen verbleibt nach der Tropfbeschichtung des parylenbehandelten Sensors mit diesem Polymer eine beachtliche Phasenreserve. Auch in diesem Fall zeigt die Untersuchung der Sensoren mit einem Mikroskop, daß der vorbehandelte Sensor eine gleichmäßige Beschichtung aufweist, der unbehandelte Sensor jedoch eine Entnetzung der Fläche zwischen beiden aktiven Interdigitalstrukturen, welche das Phasenverhalten dieses Sensors erklärt.

Das Sorptionspolymer 1 ist Butylacrylat-Ethylacrylat Copolymer und das Sorptionspolymer 2 Polyurethan, linear vernetzt.

Besonders vorteilhaftes Beispiel für die Dicke der beiden Schichten:

Parylen entweder so dünn, wie möglich (Haftvermittler ca. 20-50 nm) oder so dick, wie erträglich (Korrosionsschutz, bis 200nm).

### Besonders geeignetes OFW-Bauelement:

Die Beschichtung wurde unter anderem bei: 380 MHz Scherwellen-Bauelement aus Lithium-Tantalat und 433.92 MHz Rayleigh-Wellen-Bauelemente (beide aus Quarz) erprobt. Die Schutzwirkung und Benetzungsförderung durch das Parylen ist universell und kann nicht auf ein bestimmtes Bauteil beschränkt werden. Der Unterschied liegt nur in der maximal aufbringbaren Schichthöhe des Parylens für die unterschiedlichen Bauelemente, da dadurch unterschiedliche Einfügedämpfungen resultieren.

Die Ergebnisse, die durch Verwendung des Parylens als eine dünne Zwischenschicht erhalten wurden, lassen sich wie folgt zusammenfassen:

Die Zwischenschicht wirkt als Haftvermittler zwischen der anorganischen Substratoberfläche und dem Sorptionspolymer, indem die Oberflächenenergie des Sensors abgesenkt wird. Dadurch werden einerseits die Benetzungseigenschaften und andererseits das Alterungsverhalten der Sensoren entscheidend verbessert. Es können nun beliebige Sorptionspolymere verwendet werden, ohne Entnetzungseffekte befürchten zu müssen.

Durch das Aufbringen des Parylenfilms wird eine Diffusionsbarriere für korrosive Stoffe gebildet, die den Sensor vor aggressiven Umwelteinflüssen schützt. Gleichzeitig wird auch der Effekt einer Signalumkehrung bei Beprobung mit unterschiedlich polaren Analyten verhindert, da der entsprechende Analyt nicht mehr an die Oberfläche des Sensorsubstrates gelangen kann.

Aufgrund der durch die Parylen-Zwischenschicht verbesserten Benetzungseigenschaften können die vorbehandelten Sensoren sogar mittels des einfacheren Tropfverfahrens beschichtet werden.

Die gute Benetzung der parylenbeschichteten Sensoren mit Sorptionspolymeren ermöglicht eine Beschichtung der Sensoren bis an die kritische Phasenreserve und dadurch das Erreichen einer maximalen Empfindlichkeit des jeweiligen Sensors.

## Patentansprüche

1. Verfahren zur Herstellung von Oberflächenwellensensoren mit einer Parylenbeschichtung, auf der Basis von Oberflächenwellenbauelementen mit folgenden Verfahrenschritten:
a) Aufbringen eines polymeren Parylenfilms mit einer Dicke zwischen 20 und 200 nm auf der Oberfläche des Oberflächenwellenbauelements durch Abscheiden aus der Gasphase, wodurch die an sich hydrophile Sensoroberfläche hydrophobiert wird, und
b) Aufbringen einer hydrophilen Sorptionspolymerschicht durch Sprühbeschichtung oder Tropfbeschichtung auf den Parylenfilm, nachdem der Parylenfilm mit Hilfe einer Plasmaaktivierung hydrophiliert wurde.

2. Verfahren nach Anspruch 1, **dadurch gekennzeichnet, dass** die Dicke der Parylenschicht zwischen 20 und 50 nm liegt.

3. Verfahren nach Anspruch 1 oder 2, **dadurch gekennzeichnet, dass** die Oberfläche des Oberflächenwellenbauelements vor dem Aufbringen des Parylenfilms mit γ-Methacryloxypropyltrimethoxysilan als Monoschicht silanisiert wird.

4. Oberflächenwellensensor auf der Basis von Oberflächenwellenbauelementen, wobei ein polymerer Parylenfilm mit einer Dicke zwischen 20 und 200 nm auf der Oberfläche des Oberflächenwellenbauelements durch Abscheiden aus der Gasphase aufgebracht ist und eine hydrophile Sorptionspolymerschicht durch Sprühbeschichtung oder Tropfbeschichtung auf dem Parylenfilm aufgebracht ist, nachdem der Parylenfilm mit Hilfe einer Plasmaaktivierung hydrophiliert wurde.

5. Oberflächenwellensensor nach Anspruch 4, **dadurch gekennzeichnet, dass** die Dicke der Parylenschicht zwischen 20 und 50 nm liegt.

6. Oberflächenwellensensor nach Anspruch 4 oder 5, **dadurch gekennzeichnet, dass** die Oberfläche des Oberflächenwellenbauelements vor dem Aufbringen des Parylenfilms mit γ-Methacryloxypropyltrimethoxysilan als Monoschicht silanisiert wurde.

## Claims

1. Method of producing surface wave sensors having a parylene coating, based on surface wave components, comprising the following method steps:
a) applying a polymeric parylene film with a thickness of between 20 and 200 nm to the surface of the surface wave component by deposition from the gas phase, whereby the sensor surface, hydrophilic per se, is made water-repellent, and
b) applying a hydrophilic sorption polymer layer by spray-coating or drip-coating onto the parylene film, after the parylene film has been hydrophilised by means of plasma activation.

2. Method according to claim 1, **characterised in that** the thickness of the parylene film is between 20 and 50 nm.

3. Method according to claim 1 or 2, **characterised in that**, before the application of the parylene film, the surface of the surface wave component is silanised with γ-methacryl oxypropyl trimethoxy silane as a monolayer.

4. Surface wave sensor based on surface wave components, wherein a polymeric parylene film with a thickness of between 20 and 200 nm is applied to the surface of the surface wave component by deposition from the gas phase, and a hydrophilic sorption polymer layer is applied to the parylene film by spray-coating or drip-coating, after the parylene film has been hydrophilised by means of plasma activation.

5. Surface wave sensor according to claim 4, **characterised in that** the thickness of the parylene layer is between 20 and 50 nm.

6. Surface wave sensor according to claim 4 or 5, **characterised in that**, before the application of the parylene film, the surface of the surface wave component has been silanised with γ-methacryl oxypropyl trimethoxy silane as a monolayer.

## Revendications

1. Procédé permettant de produire des détecteurs d'ondes acoustiques de surface sur la base de composants d'ondes acoustiques de surface avec un revêtement de parylène avec les étapes de procédé suivantes :
a) application d'un film polymère de parylène d'une épaisseur comprise entre 20 et 200 nm à la surface des composants d'ondes acoustiques de surface par la précipitation de la phase gazeuse, ce qui permet d'hydrophobiser la surface de détecteur hydrophile, et
b) application d'une couche de polymère de sorption hydrophile par le revêtement par vaporisation ou le revêtement en gouttes sur le film de parylène, après que le film de parylène est hydrophilisé à l'aide d'une activation au plasma.

2. Procédé selon la revendication 1,
**caractérisé en ce que**
l'épaisseur de la couche de parylène est comprise entre 20 et 50 nm.

3. Procédé selon la revendication 1 ou 2,
**caractérisé en ce que**
la surface du composant d'ondes acoustiques de surface est silanisée sous forme de monocouche avant l'application du film de parylène avec du γ-méthacryloxypropyle-trimethoxysilane.

4. Détecteur d'ondes acoustiques de surface sur la base de composants d'ondes acoustiques de surface, avec un film polymère de parylène d'une épaisseur comprise entre 20 et 200 nm appliqué à la surface du composant d'ondes acoustiques de surface par la précipitation à partir de la phase gazeuse, et avec une couche de polymère de sorption hydrophile appliquée par un revêtement par vaporisation ou un revêtement en gouttes sur le film de parylène, après que le film de parylène est hydrophilisé à l'aide d'une activation au plasma.

5. Détecteur d'ondes acoustiques de surface selon la revendication 4,
**caractérisé en ce que**
l'épaisseur de la couche de parylène est comprise entre 20 et 50 nm.

6. Détecteur d'ondes acoustiques de surface selon la revendication 4 ou 5,
**caractérisé en ce que**
la surface du composant d'ondes acoustiques de surface est silanisée sous forme de monocouche avant l'application du film de parylène avec du γ-méthacryloxypropyle-triméthoxysilane.
